# EUROPÄISCHE PATENTSCHRIFT

(11) **EP 0 438 639 B1**
(45) Veröffentlichungstag und Bekanntmachung des Hinweises auf die Patenterteilung: **12.01.1994**
(21) Anmeldenummer: 90119120.5
(22) Anmeldetag: 05.10.1990
(51) Int. Cl.: B01D 46/52

(54) **Verfahren zur Herstellung eines als Faltenpack ausgebildeten Filtereinsatzes aus Vliesstoff**
Production method of a corrugated filter element made of fibre fleece
Procédé de fabrication d'un élément filtrant plissé en nappe de fibres

(30) Priorität: 25.01.1990 DE 4002078
(43) Veröffentlichungstag der Anmeldung: 31.07.1991
(73) Patentinhaber: Firma Carl Freudenberg, 69469 Weinheim (DE)
(72) Erfinder: Michaelis, Udo, D-6945 Hirschberg 1 (DE); Schlör, Ulrich, D-6100 Darmstadt (DE)

(56) Entgegenhaltungen:
- DE-A- 2 137 309
- DE-A- 2 304 882
- DE-C- 965 012
- US-A- 1 890 499
- US-A- 3 401 803
- US-A- 3 474 599

## Beschreibung

Die Erfindung betrifft ein Verfahren gemäß dem Oberbegriff des ersten Patentanspruchs zur Herstellung eines als Faltenpack ausgebildeten Filtereinsatzes aus thermoplastisch verschweißbarem Faservliesstoff.

Solche Filtereinsätze, insbesondere als Luftfilter für Kraftfahrzeuge, bestehen üblicherweise aus einem in Zickzackfalten gelegten Filterwerkstoff, beispielsweise aus Papier oder Vliesstoff.

In Anlagen, bei denen eine dosierte Luftmenge benötigt wird, wie beispielsweise bei Fahrzeug-Klimaanlagen, ist es erforderlich, die Anzahl der Faltungen und die Faltentiefe in Abhängigkeit von deren filtertechnischen Eigenschaften derart festzulegen, daß der durch den Staubfilter bewirkte Druckabfall möglichst minimiert wird.

Bei der Herstellung wird zunächst der Faltenpack geformt, wobei die durch zickzackförmige Falten gebildeten Taschen an den Außenkanten mit einem festen Zusatzwerkstoff verklebt werden. Anschließend werden die einzelnen, so gebildeten Falten im Abstand zueinander eingeregelt, und dann wird dieser Filterpack in einem Rahmen eingesetzt.

Mit Hilfe von z.B. PUR-Weichschaumsystemen werden nunmehr die unteren Randkanten des so gebildeten Faltenpacks miteinander verbunden, so daß der Abstand der einzelnen Falten arretiert ist. Dieser Schaum dient gleichzeitig als Rahmung und als Dichtung, um später einen leckfreien Abschluß des in ein entsprechendes Gehäuse eingesetzten Filters zu erreichen.

Die so gefertigten Filtereinsätze besitzen zum Teil keine genügende Eigenstabilität und benötigen für den Einbau einen entsprechend aufwendigen Aufnahmerahmen.

Ein weiterer Nachteil besteht im Recycling der Filtereinsätze. Neben dem Filtermedium müssen Zusatzwerkstoffe, wie z.B. Klebstoffe und Rahmungen, mit entsorgt werden.

Für die bekannten Herstellungsverfahren sind mehrere Arbeitsgänge erforderlich, z.B. Kleben mit Zusatzwerkstoffen, Schäumen oder auch Spritzgießen. Nachteilig ist auch, daß die flüssige Dichtmasse an den Außenkanten der Falten in der Form expandiert und reagiert, d.h. sie fließt auch in den Bereich unter dem eigentlichen Faltenpack und verschließt dadurch teilweise die An- oder Abströmöffnung, so daß der Faltenpack bezüglich des Druckabfalls nicht optimiert ist.

Aus DE-A-21 37 309 ist ein Filter aus einem zickzackförmig gefalteten, mit Phenolharz imprägnierten Papierstreifen bekannt geworden, dessen Rahmen aus dem zusammengepreßten, durch das Kunstharz der Imprägnierung verfestigten Rand des Faltblocks besteht. Die Versteifung wird durch das Kunstharz erzielt, welches bereits als Imprägnierung im Faltblock vorhanden ist. Der Rahmen ist von vornherein dicht mit dem Filtermaterial verbunden, da er aus diesem Material besteht. Bei der Herstellung wird ein Filterpapierstreifen aus porösem Filterpapier mit Kunstharz getränkt, in eine Heiz- und Trockenvorrichtung und daran anschließend in eine Faltvorrichtung geführt. Der gefaltete Streifen wird anschließend in einer Schere in Faltblöcke zerschnitten, wobei der Schnitt entlang der Faltkanten läuft. Die Faltblöcke gelangen dann in eine kombinierte Preß- und Heizvorrichtung, in der der Rand des Faltblocks, dessen Falten auf den endgültigen Abstand zusammengeschoben sind, in Richtung senkrecht zur Flächenausdehnung des Faltblocks gepreßt und erwärmt wird, wobei die Erwärmung so hoch ist, daß das Kunstharz schweißfähig wird. Anschließend wird der zusammengepreßte Rand abgekühlt bis zur Verfestigung des Kunstharzes. Es wird auch erwähnt, den dazu erforderlichen Druck durch Preßrollen aufzubringen, zwischen denen man die zusammenzupressenden Randabschnitte abrollen läßt. Auf die Schwierigkeiten bei der Temperatursteuerung wird ausdrücklich hingewiesen und eine vorsichtige Handhabung empfohlen.

DE-C-965 012 beschreibt ein Faltenfilter, dessen Faltenenden in Richtung der längsten Falte hin umgelegt sind derart, daß in diesem Zustand jedes Faltenende die benachbarte Falte überdeckt und in der Randpartie bereits ein flächenhafter Abschluß der Falten besteht. Ein Herstellungsverfahren wird nicht angegeben.

DE-A-23 04 882 schlägt ein Verfahren zur Herstellung eines als Faltenpack ausgebildeten Filtereinsatzes aus thermoplastisch verschweißbarem Faservliesstoff vor, wobei man das flächige Filtermedium in einer Faltvorrichtung zunächst faltet und es dann bei einem eingestellten, definierten Faltenabstand durch Einwirkung von Hitze auf die gesamte Vliesstoff-Fläche und anschließendes Abkühlen in seiner bestehenden Form bleibend fixiert. Anschließend stößt das verformte Filtermedium vor einen Anschlag, der es in seiner Zickzackform stapelt. Das gefaltete Filtermedium benötigt an den Randkanten einen Rahmen, um in einer Luftfilterzelle einsatzfähig zu sein. Lediglich die Zickzackform bedarf keiner weiteren Stützelemente.

Ausgehend vom letztgenannten Stand der Technik ist es die Aufgabe der vorliegenden Erfindung, ein Herstellungsverfahren für einen Filtereinsatz anzugeben, welches die genannten Nachteile nicht besitzt. Andere Werkstoffe als der des Filtermaterials selbst, z.B. Kunstharze als Imprägnierung, sollen weitgehend entbehrlich werden. Das Herstellungsverfahren soll weniger Arbeitsgänge erfordern, und insbesondere soll dabei auf die flüssige Dichtmasse für die Außenkanten sowie auf eine separate Rahmung verzichtet werden können.

Die Lösung der Aufgabe besteht in einem gattungsgemäßen Verfahren mit den kennzeichnenden Merkmalen des ersten Patentanspruchs. Vorteilhafte Ausgestaltungen werden in den Unteransprüchen aufgezeigt.

Der erfindungsgemäß hergestellte Filtereinsatz aus Vliesstoff ist als Faltenpack ausgebildet und in drei Koordinatenrichtungen biegesteif. Durch die selbsttragende Ausführung werden das Handling und die Montage erleichtert wie auch die konstruktive Gestaltung der Aufnahmevorrichtung und die Applikation der Dichtung vereinfacht. Durch ein hohes Trägheitsmoment dieser Konstruktion lassen sich Flächenbelastungen, die durch den Druckanstieg im Filtermedium entstehen, gut kompensieren.

Die Erfindung wird im folgenden anhand der beispielhaften dargelegten Figuren näher erläutert. Es zeigen:
Fig. 1 eine Draufsicht auf einen erfindungsgemäß hergestellten Filtereinsatz;
Fig. 2 die perspektivische, schematische Darstellung der Bestandteile des Filters und der Hilfsvorrichtung zu dessen Herstellung vor dem Zusammenfügen;

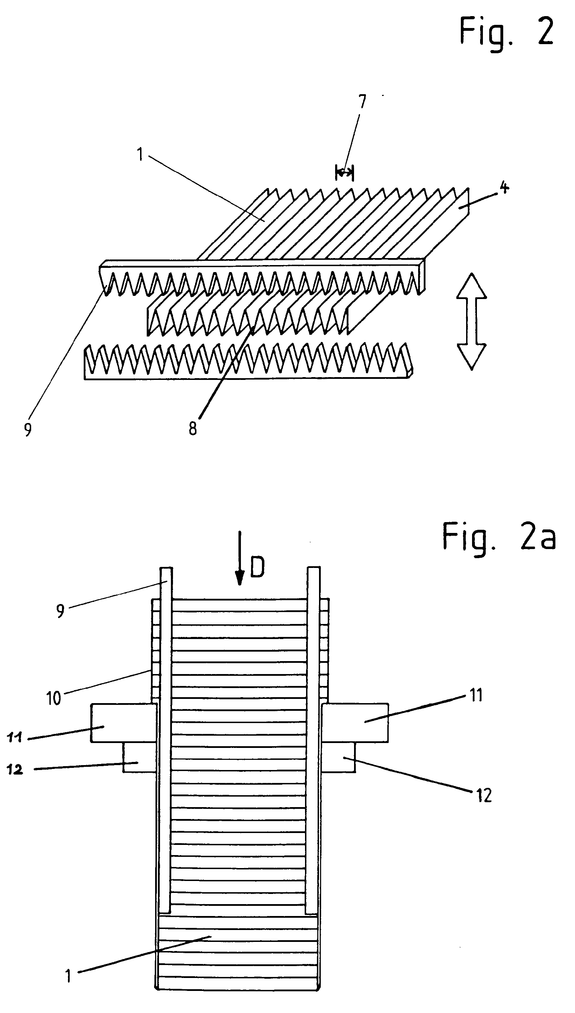

Fig. 2 a schematisch, in Draufsicht, das Erzeugen der Filterkanten.

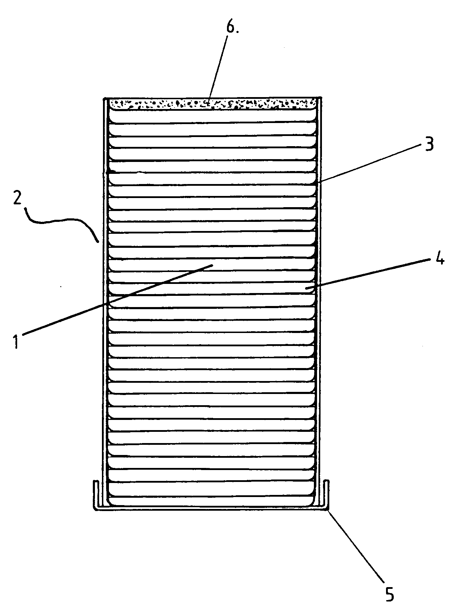

### Zunächst sei Figur 1 betrachtet.

Das Vliesstoffmaterial muß sich mit sich selbst unter Zuführung von Energie verschweißen lassen können. Dies ermöglicht eine Verbindungsmethode zur Filtertaschenbildung ohne zusätzliches Medium, z.B. Klebstoff.

Die beiden zur Richtung der Falten 4 senkrecht verlaufenden Seitenflächen bestehen aus Vliesstoff 1, der die Funktion eines Rahmens übernimmt. Dadurch wird kein zusätzlicher Werkstoff zur Bildung dieses Rahmens benötigt.

Jede Falte 4 des so fixierten, fertig konfektionierten Faltenpacks 2 ist an ihrer Außenkante seitlich in die gleiche Richtung umgeknickt und an den benachbarten Faltenkanten 3 eng anliegend und somit leckfrei fixiert. Durch das Umknicken und Überlappen aller benachbarten Falten 4 in eine Richtung wird eine geschlossene Seitenfläche erzeugt. Diese Fläche dichtet den Filter seitlich ab und verleiht ihm eine dreidimensionale Eigensteifigkeit.

Das die Falten 4 bildende Vliesstoffmaterial 1 überlappt die entsprechende Knickkante 3 des benachbarten Faltenendes um das 1,5- bis 2,5-fache des Faltenabstandes 7. Bei kleineren Überlappungsraten ist eine versteifende, stabile Rahmung mit gleichzeitig leckfreier, überlappender Abdichtung der einzelnen Faltenzwischenräume nicht gewährleistet, d.h. es sind zu geringe bzw. keine Auflageflächen mehr vom Faltenende zur nächsten Falte vorhanden. Überlappungen über den Betrag 2,5 x hinaus wirken sich nicht mehr entscheidend auf die Stabilität des Rahmens aus. Es müßten dann mehr als drei Falten verschweißt werden; hohe Schweißenergie und längere Kühlzeiten wären die Folge, ebenso ein Mehr an Materialverbrauch.

Das Verfahren zur Herstellung des Faltenfilter-Einsatzes ist in den Figuren 2 und 2 a schematisch gezeigt. Zweckmäßig faltet man zuerst das flächige Filtermedium und erzeugt dann durch begrenztes Auseinanderziehen quer zur Faltung einen definierten Faltenkamm-Abstand 7. Als Material für den herzustellenden Faltenpack wählt man thermoplastisch verschweißbaren Faservliesstoff. Nach dem Erzeugen des definierten Faltenabstandes 7 klemmt man die beiden herausragenden Endfalten 10 des gefalteten Vliesstoffs 1 formschlüssig ein in der Faltengeometrie und -abmessung entsprechende, kammartige, ober- sowie unterseitig in die Faltung zangenartig eingreifende Profile 9, wobei man auf jeder Seite die parallelen Außenkanten 8 der Falten 4 um das 1,5- bis 2,5-fache des Faltenabstands 7 über die kammartigen Profile 9 überragen läßt. Somit weist jedes kammartige Profil 9 im Einspannzustand überstehende Außenkanten 10 der Falten 4 auf.

Die kammartigen Profile 9 sind in den durch einen Doppelpfeil (Fig. 2) markierten Richtungen verschiebbar vorgesehen und bestehen aus Leisten, die mit kammartig angeordneten Zinken versehen sind, welche ineinandergreifen und parallele oder etwas geneigte Flanken aufweisen. Dadurch wird sichergestellt, daß die Faltenkanten formschlüssig eingespannt werden. Gleichzeitig bilden die Profile 9 eine Anschlagfläche bzw. ein Widerlager für den Andruck der Schweißvorrichtung 11.

Der Abstand der ober- und unterseitigen Profile 9 zueinander im eingespannten Zustand wird zweckmäßig gleich oder geringfügig kleiner gewählt als die Dicke des Filtermediums, also des Faservliesstoffs 1.

Gemäß Fig. 2 a - die Laufrichtung ist mit "D" angegeben - legt man das beiderseits überstehende Vliesstoff-Material 10 jeweils mittels eines ersten, seitlich darauf einwirkenden Andruckelements 11 um, bis das überstehende Material am benachbarten Faltenende anliegt, so daß sich die Kanten 10 überlappen, wobei man gleichzeitig mit über die Andruckelemente 11 zugeführter Energie die Überlappungszonen der umgelegten Außenkanten 10 thermisch verschweißt.

Mit weiteren Andruckelementen 12 werden dann die Schweißstellen bis zu deren Abkühlung aneinandergepreßt und fixiert. Zuletzt werden die kammartigen Profile 9 entfernt und das Faltenband abgelängt.

Jedes der beiden ersten Andruckelemente 11 wird mit einem Abstand, der von der Dicke des Filtermediums 1 und des benötigten Schweißdrucks abhängig ist, linear an den Kämmen 9 entlanggeführt, wobei es die überstehenden Außenkanten 10 seitlich umknickt.

Der Vorteil dieser Technik liegt in den dadurch nicht mehr so engen erforderlichen Schneidtoleranzen des Faltenpacks, bezogen auf Breite und Parallelität der Schnittkanten der Faltenenden. Bei heute bekannten Fertigungsmethoden müssen Faltenpacks, die leckfrei in vorgefertigten Rahmungen eingeklebt werden, sehr präzise geschnitten werden.

Das erste Andruckelement 11 ist so gestaltet, daß gleichzeitig die benötigte Technik für die Einleitung der Energie zur thermischen Verschweißung integriert ist. Dadurch wird eine sehr kompakte und wirtschaftliche Bauweise möglich. Ein weiterer Vorteil ist, daß eine einzige Anordnung der beiden ersten Andruckelemente eine Faltenhöhenvariation des Faltenpacks 2 bis hinauf zu 100 mm ermöglicht.

Das in der genannten Weise noch nicht formbeständige Material wird bis zur Abkühlung durch weitere Andruckelemente 12 fixiert. Dadurch wird gleichzeitig eine Kalibrierung der Außenkontur, d.h. des Rahmens, erzeugt. Mehrere dieser letzten Andruckelement-Paare 12 lassen sich auch in Tandembauweise anordnen.

Die in die Falten greifenden Kämme der Profile 9 werden dann aus den Filtertaschen vertikal herausgezogen und der Filterpack 2 in einem weiteren Verfahrensschritt auf die Einbaulänge zugeschnitten.

Das beschriebene Verfahren ermöglicht eine kontinuierliche Faltenpackherstellung, und es läßt sich eine beliebig variable Faltenpacklänge darstellen.

Die Definition eines thermisch verschweißbaren Vliesstoffs ist für die vorliegende Erfindung sehr weit zu begrenzen. Es können Vliesstoffe verwendet werden, die zum Teil oder vollständig aus thermoplastischen Fasern bestehen, oder alle solche, die zur Verschweißung befähigten thermoplastischen Binder enthalten.

Im beanspruchten Verfahren erfolgt die Rahmung des Filterpacks ausschließlich mit dem verwendeten Filtermedium 1 ohne den Einsatz weiterer Werkstoffe. Durch die Umknickung der Außenkanten 10 des Filterpacks und die dadurch erzielte überlappende Abdichtung der einzelnen Faltenzwischenräume wird eine leckfreie, versteifende und stabile Rahmung des Faltenpacks 2 gewährleistet. Dieser Filtereinsatz besitzt dann oft bereits die geforderte Eigenstabilität.

Da eine zusätzliche Rahmung entfällt, läßt sich der zur Verfügung stehende Einbauraum für die Minimierung des Druckabfalls freier gestalten.

Entscheidende Vorteile bringt der so gefertigte Filtereinsatz auch wegen der einfachen Entsorgung während eines Recyclingverfahrens. Der Einsatz besteht im wesentlichen nur aus einem definierten Werkstoff.

Die Verfahrenstechnik ist rationell und entspricht einer Online-Fertigung. Mit einer einzigen Kammgeometrie lassen sich unterschiedliche Faltenpack-Breiten realisieren. Damit sind die Voraussetzungen für eine wirtschaftliche Herstellungsweise gegeben. Dies gilt ebenso für das Anbringen der Dichtung, die im Verfahren direkt an die Außenfläche des Filterpacks umlaufend angeschweißt wird.

Im Rahmen einer Verfahrensvariante erhitzt man das erste Paar Andruckelemente 11 auf eine Temperatur oberhalb des Schmelzbereiches der bindefähigen Komponente des Vliesstoffs 1. Bei diesem Kontaktschweißverfahren dienen die Andruckelemente 11 als Schweißwerkzeug. Ein solches Verfahren ist bei dicken, mechanisch stark dämpfenden und im Schmelzbereich gering haftenden Faservliesstoffen vorzuziehen.

In einem alternativen Verfahrensschritt werden die umgeknickten, überlappenden Faltenenden 10 mittels Andruckelementen 11 verbunden, die als Ultraschall-Sonotrode ausgebildet sind.

Vorteile dieser Variante sind extrem kurze Schweiß- und Kühlzeiten sowie materialschonende, nur punktuell auftretende hohe Temperaturen im Vliesstoff. Zweckmäßig wird man sie anwenden an mechanisch gering dämpfenden und im Schmelzbereich stark haftenden Vliesstoffen.

Unabhängig von den vorgenannten Verfahrensvarianten wird vorgeschlagen, als letzten, zusätzlichen Verfahrensschritt an den beiden Stirnseiten des Faltenpacks jeweils einen thermoplastischen Kunststoff-Folienstreifen 5 anzuschweißen, der exakt die Breite des Packs 2 besitzt oder umgreifend angeordnet ist. Diese Streifen haben die Aufgabe, die Stirnseiten in horizontaler Richtung zu verstärken, so daß sie den Druck der Dichtung beim Zusammenfügen der Filterkassette aufnehmen können.

Alternativ hierzu gießt man vor dem Ablängen, an den künftigen Schnittstellen, jeweils mindestens eine Faltentasche mit einer bei Raumtemperatur aushärtenden Kunststoff-Hartmasse 6 aus. Zum Ablängen des Faltenpacks 2 wird diese dann in der Faltung mittig durchgetrennt. Die entstandene Schnittfläche bildet so eine winklige Außenseite des Faltenpacks 2, welche dessen Höhe aufweist. Die Konstruktion ist sehr dimensionsstabil.

### Bezugszeichenliste

- 1: gefalteter Vliesstoff
- 2: konfektionierter Faltenpack
- 3: umgelegte Faltenaußenkante
- 4: Falte
- 5: stirnseitige Kunststoff-Folie
- 6: stirnseitige Kunststoff-Hartmasse
- 7: Faltenabstand/Faltenkamm-Abstand
- 8: noch nicht eingespannte Außenkante der Falten 4
- 9: kammartige Profile
- 10: überstehende Außenkanten der Falten 4 im eingespannten Zustand
- 11: erstes Andruckelementenpaar
- 12: weiteres Andruckelementenpaar
- D: Durchlaufrichtung des gefalteten Vliesstoffs 1 während der Herstellung

## Patentansprüche

1. Verfahren zur Herstellung eines als Faltenpack ausgebildeten Filtereinsatzes aus thermoplastisch verschweißbarem Faservliesstoff, wobei man das flächige Filtermedium in einer Faltvorrichtung zunächst faltet und es dann bei einem eingestellten, definierten Faltenabstand unter Zuführung von Energie und anschließendem Abkühlen in seiner bestehenden Form bleibend fixiert,
dadurch gekennzeichnet,
daß man nach dem Verfahrensschritt des Erzeugens eines definierten Faltenabstandes (7) die beiden Außenkanten (8) des Faltenpacks formschlüssig einklemmt in der Faltengeometrie und -abmessung entsprechende, kammartige, ober- sowie unterseitig in die Faltung zangenartig eingreifende Profile (9), deren Abstand zueinander gleich oder geringfügig kleiner gewählt wird als die Dicke des Faservliesstoffs (1), wobei man auf jeder Längsseite das Filtermaterial um das 1,5- bis 2,5-fache des Faltenabstands (7) über die kammartigen Profile (9) überragen läßt;
daß man dieses, somit überstehende Material (10) beiderseits jeweils mittels eines ersten seitlich darauf einwirkenden Andruckelements (11) umlegt, bis das überstehende Material (10) am benachbarten Faltenende anliegt, so daß sich die Kanten (8, 10) überlappen, wobei man gleichzeitig mit über die Andruckelemente (11) zugeführter Energie die Überlappungszonen thermisch verschweißt;
daß man durch weitere Andruckelemente (12) die Schweißstellen bis zu deren Abkühlung aneinanderpreßt und fixiert, anschließend die kammartigen Profile (9) entfernt und den Faltenpack ablängt.

2. Verfahren nach Anspruch 1, dadurch gekennzeichnet, daß man das erste Paar beiderseitige Andruckelemente (11) auf eine Temperatur oberhalb des Schmelzbereichs der bindefähigen Komponente des Vliesstoffs (1) erhitzt.

3. Verfahren nach Anspruch 1, dadurch gekennzeichnet, daß man als erste beiderseitige Andruckelemente (11) Ultraschall-Sonotroden verwendet.

4. Verfahren nach einem der vorhergehenden Ansprüche, dadurch gekennzeichnet, daß man als letzten, zusätzlichen Verfahrensschritt an den Stirnseiten des Faltenpacks (2) jeweils einen thermoplastischen Kunststoff-Folienstreifen (5) anschweißt.

5. Verfahren nach einem der Ansprüche 1 bis 3, dadurch gekennzeichnet, daß man vor dem Ablängen, an den künftigen Schnittstellen, jeweils mindestens eine Faltentasche mit einer bei Raumtemperatur aushärtenden Kunststoffmasse (6) ausgießt und die ausgehärtete Kunststoffmasse dann zum Ablängen in der Faltung mittig durchtrennt.

## Claims

1. A process for producing a filter element designed as a folded pack from thermoplastically weldable nonwoven fabric, the flat filter medium being first folded in a folding device and then being permanently fixed in its existing shape with a set, defined fold spacing with the supply of energy and subsequent cooling, characterized in that, after the process step of generating a defined fold spacing (7), the two outer edges (8) of the folded pack are clamped in a positive-locking manner in comb-like profiles (9) which correspond to the fold geometry and fold dimension, engage at the top and bottom side in the fold in a pincer-like manner and whose distance from one another is chosen so as to be equal to or slightly smaller than the thickness of the non-woven fabric (1), the filter material being allowed to project over the comb-like profiles (9) on each longitudinal side by 1.5 to 2.5 times the fold spacing (7); in that this material (10) thus protruding is laid around in each case on both sides by means of a first pressing element (11) acting laterally thereon, until the protruding material (10) bears against the adjacent fold end, so that the edges (8, 10) overlap, the overlapping zones being simultaneously thermally welded by means of energy supplied via the pressing elements (11); in that, by means of further pressing elements (12), the weld points are pressed against one another until cool and are fixed, subsequently the comb-like profiles (9) are removed and the folded pack is cut to length.

2. A process according to claim 1, characterized in that the first pair of pressing elements (11) on both sides is- heated to a temperature above the melting range of the bindable component of the non-woven fabric (1).

3. A process according to claim 1, characterized in that ultrasonic sonotrodes are used as the first pressing elements (11) on both sides.

4. A process according to any of the preceding claims, characterized in that, as the last, additional process step, a thermoplastic film strip (5) is welded in each case on the end sides of the folded pack (2).

5. A process according to any of claims 1 to 3, characterized in that, before cutting to length, at the future cutting points, at least one fold pocket in each case is filled by casting with a plastics composition (6) curing at room temperature and the cured plastics composition is then cut through centrally in the fold for cutting to length.

## Revendications

1. Procédé de fabrication d'un composant de filtre, agencé comme un élément plissé et formé d'une matière en nappe de fibres soudable thermoplastiquement, selon lequel l'agent de filtrage de grande surface est initialement plié dans un dispositif de pliage et est ensuite fixé en permanence dans sa forme existante, avec un espacement réglé et défini entre plis, en appliquant de l'énergie et en effectuant ensuite un refroidissement, procédé caractérisé en ce que, après l'étape opératoire d'établissement d'un espacement défini entre plis (7), les deux bords extérieurs (8) de l'élément plissé sont serrés, avec conjugaison de formes, dans des profilés (9) en forme de peignes, correspondant à la géométrie et aux dimensions des plis et qui s'engagent par le haut et par le bas dans la partie pliée à la façon de pince, l'espacement mutuel des profilés étant choisi égal ou légèrement plus petit que l'épaisseur de la matière en nappe de fibres 1, en laissant dépasser, sur chaque côté longitudinal, la matière filtrante des profilés (9) en forme de peignes d'une distance comprise entre 1,5 et 2,5 fois l'espacement entre plis (7) ; en ce qu'ensuite, cette matière en dépassement (10) est rabattue des deux côtés respectivement au moyen d'un premier élément de pression (11) agissant latéralement sur elle, jusqu'à ce que la matière en dépassement (10) s'applique contre l'extrémité adjacente des plis, de telle sorte que les bords (8, 10) se recouvrent, tandis que simultanément les zones en recouvrement sont soudées thermiquement au moyen d'énergie appliquée au moyen des éléments de pression (11); en ce que, à l'aide d'autres éléments de pression (12), les zones soudées sont maintenues appliquées mutuellement jusqu'à leur refroidissement et sont ainsi fixées et ensuite les profilés (9) en forme de peignes sont enlevés et l'élément plissé est découpé à longueur.

2. Procédé selon la revendication 1, caractérisé en ce qu'on chauffe la première paire d'éléments de pression (11), situés de chaque côté, jusqu'à une température supérieure à la plage de fusion des constituants de la matière en nappe (1) qui sont aptes à la liaison.

3. Procédé selon la revendication 1, caractérisé en ce que, comme premiers éléments de pression (11) situés de chaque côté, on utilise des électrodes ultrasoniques appelées "sonotrodes".

4. Procédé selon une des revendications précédentes, caractérisé en ce que, dans une dernière étape opératoire additionnelle, on soude sur les côtés frontaux de l'élément plissé (2) respectivement une bande de matière en feuille thermoplastique (5).

5. Procédé selon une des revendications 1 à 3, caractérisé en ce que, avant la mise à longueur, on opère dans les zones de découpage futures, en coulant respectivement dans au moins une poche entre plis un enduit (6) en matière plastique durcissant à la température ambiante et cet enduit en matière plastique durci est ensuite sectionné en son milieu dans la zone pliée en vue d'une mise en longueur.
